# EUROPEAN PATENT SPECIFICATION

(11) **EP 2 701 519 B1**
(45) Date of publication and mention of the grant of the patent: **08.07.2015**
(21) Application number: 12722528.2
(22) Date of filing: 12.04.2012
(51) Int. Cl.: A21C 11/00

(54) **MACHINE FOR ROLLING OUT DOUGH, IN PARTICULAR FOR PREPARING PIZZA**
MASCHINE ZUM AUSROLLEN VON TEIG, INSBESONDERE ZUR HERSTELLUNG VON PIZZA
MACHINE POUR ABAISSER UNE PÂTE, EN PARTICULIER POUR PRÉPARER DES PIZZAS

(30) Priority: 29.04.2011 IT BS20110063
(43) Date of publication of application: 05.03.2014
(73) Proprietor: Sigma S.r.l., 25030 Torbole Casaglia, Brescia (IT)
(72) Inventor: GNOCCHI, Luciano, I-25030 Torbole Casaglia, Brescia (IT)
(74) Representative: Chimini, Francesco
(86) International application number: PCT/IB2012/051787
(87) International publication number: WO 2012/146999

(56) References cited:
- EP-A1- 0 463 221
- EP-A1- 1 129 621
- US-A1- 2009 162 512

## Description

The present invention relates to a machine for rolling out dough, in particular for preparing pizza.

Several machines of this type already exist, substituting manual labour in industrial production:

Such machines comprises flattening means, for example in the form of plates moved by a piston, which descend onto a block of dough to be rolled out and which press it to achieve the desired thickness. The violent flattening of the dough however causes water to exude from it making the dough stickier and harder to work. This drawback is accentuated by the fact that to obtain a dough of the desired thickness with a single pressing action the flattening plates are usually heated, for example up to a temperature of 150°C.

In another prior art disclosure, the dough is worked by a pair of opposite conical rollers, such a machine is known from US 2009/0162512 A. This system of rolling out the dough however takes a long time to achieve the desired thickness and diameter and is therefore very slow, especially if used for industrial scale production. In addition, in the rolling operation the conical rollers tend to stick to the dough. Another machine for the automatic forming of dough know from the prior art is based on a rotating dough press supported by rollers (see EP 0 463 221 A).

In a further prior art disclosure, the dough to be rolled out is placed on a support of a truncated cone shape and the flattening head is built to perform the flattening operation in several distinct steps, first in the centre of the dough, on the flat apical portion of the support, and then on the peripheral portion of the dough, rolling it out along the lateral surface of the support. It has in fact been found that such processing of the dough in several steps, first in the centre of the dough and subsequently on the periphery, makes it possible to obtain a dough of desired thickness and diameter without the drawbacks of the pressing with single heated pilate and in a shorter time than with the rolling out with conical rollers. Such system of processing the dough however is not suitable for use on a production line where the blocks of dough are positioned on a continuous conveyor belt, essentially on account of the fact that such belt is in movement and cannot therefore accept a pressing performed on a truncated cone shape support.

Currently therefore the problem of processing dough on a continuous line has been resolved by providing several machines along the line to process the same block of dough. A first machine has a central plate of a reduced diameter suitable for partially flattening the dough; at least one second machine has a plate of a larger diameter or in the shape of a circular crown to complete the flattening of the dough.

The disadvantages of such a multiplication of the machines needed to flatten the same dough are evident.

In addition, with the flattening plate machines it is difficult if not impossible to create the raised edge of the pizza which pizza chefs usually succeed in obtaining. In fact, the flattening action produced by industrial machines is unable to simulate the manual method performed by pizza chefs.

The purpose of the present invention is to propose a machine for rolling out dough, in particular for preparing pizza, able to overcome the drawbacks spoken of above and in particular suitable for being used on a continuous line.

Such purpose is achieved by a machine according to claim 1.

The characteristics and advantages of the machine according to the present invention will be evident from the description below of one embodiment thereof, made by way of a non-limiting example, in accordance with the appended drawings. In said drawings:

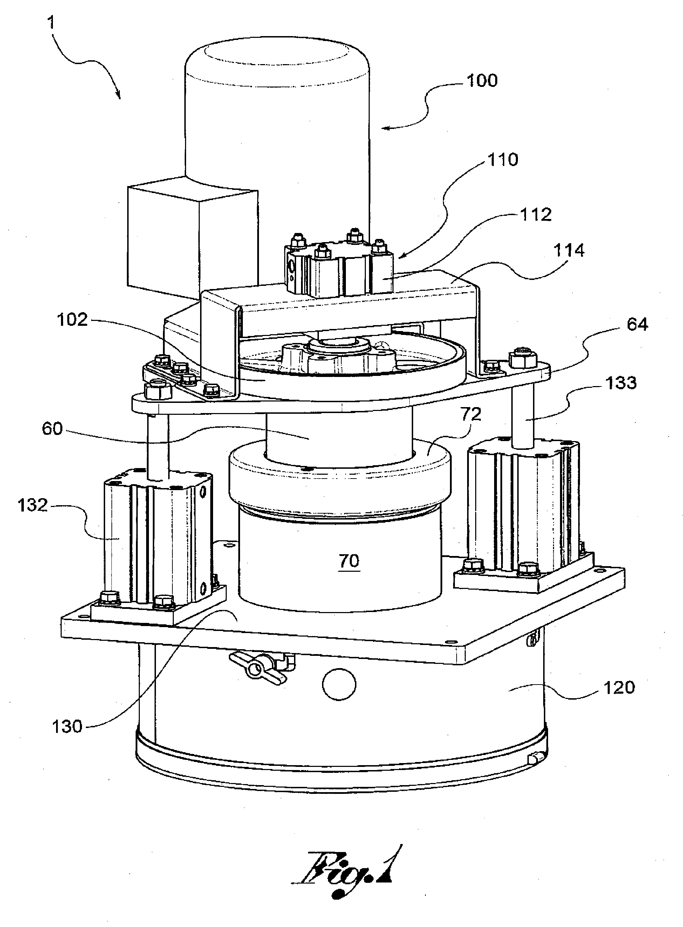

- figure 1 is a perspective view of the roller head of a machine for rolling out dough according to the invention;

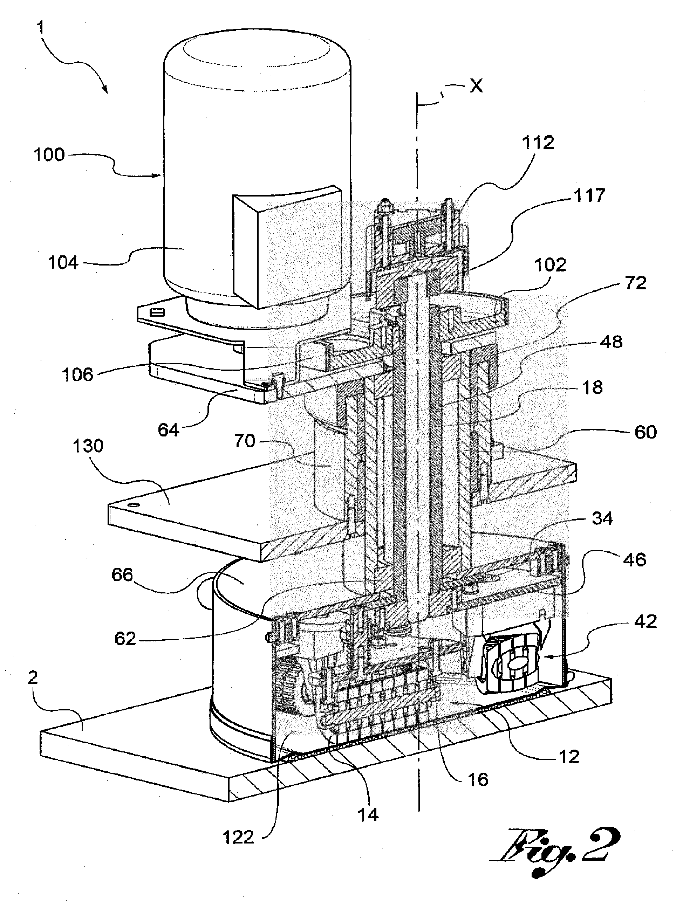

- figure 2 is a perspective view of the roller head axially cross-sectioned;
- figure 3 is a plan view from below of the roller head;

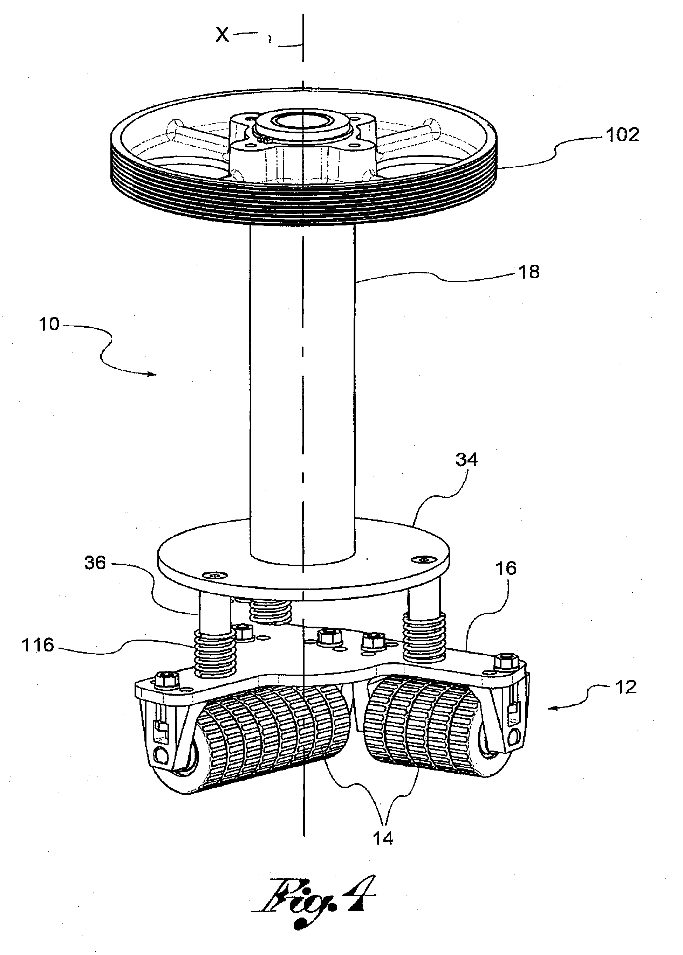

- figure 4 is a perspective view of the roller group only inside the head;

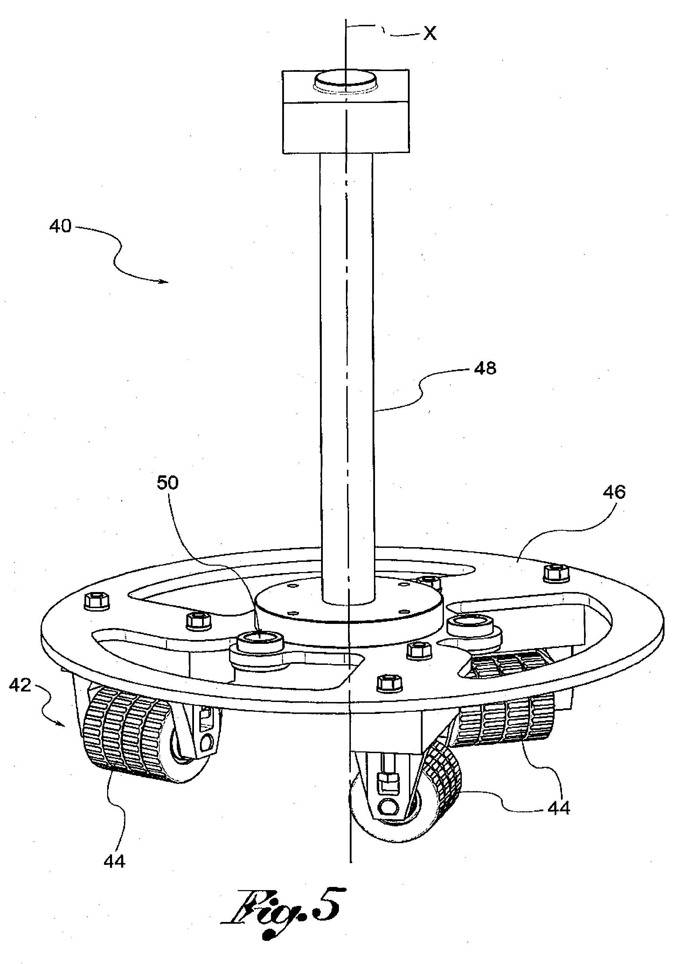

- figure 5 is a perspective view of the roller group only outside the head;
- Figure 6 shows, in axial cross-section, the roller head with the roller groups in an inactive raised position, away from the support surface of the dough;
- Figure 7 shows, in axial cross-section, the roller head with the roller groups in an active lowered position of flattening the dough, with the outer roller group rearward of the inner; and
- Figure 8 shows, in axial cross-section, the' head with the roller groups in an active lowered position and aligned with each other.

With reference to the attached figures, reference numeral 1 globally denotes a roller head of a machine for rolling out dough, in particular for preparing pizza, according to the invention.

According to a general embodiment, the roller head 1 comprises an inner roller group 10 and an outer roller group 40 of the dough. The inner roller group 10 comprises first roller means 12 of the dough suitable for rotating around a group rotation axis X substantially orthogonal to a support surface 2 of the dough 3 to be rolled out. For example said support surface 2 is a continuous belt movable along a horizontal direction.

Said first roller means 12 of the dough are suitable for working a central or inner portion of the dough, that is a portion having a lesser final diameter than the desired diameter of the dough.

The outer roller group 40 comprises second roller means 42 of the dough, suitable to rotate around said group rotation axis X to work at least a peripheral portion of the dough to give it the desired final diameter.

The term inner 10 and outer 40 roller groups is taken to mean that, given a different radial extension and/or positioning in relation to the group rotation axis X and/or different inclination, the circumference defined by the rotation of the radially outermost extremity of the second roller means 42 around the group rotation axis X has a greater diameter than the circumference defined by the rotation of the radially outermost extremity of the first roller means 12 around said axis X.

The outer roller group 40 is, in addition, axially movable, that is in the direction of the group rotation axis X, in relation to the inner roller group 10 in such a way that at least one step of rolling out the dough 3 can be performed with only one, or at least mainly with one, of said first 10 and second 40 roller groups.

In a preferred embodiment, the first roller means 12 comprise a plurality of inner rollers 14 with roller rotation axes Y substantially orthogonal to the group rotation axis X, coplanar to each other and positioned in a spoke pattern around the group rotation axis X.

In such embodiment, the second roller means 42 also comprise a plurality of outer rollers 44 with roller rotation axes Z substantially orthogonal to the group rotation axis X, coplanar to each other and positioned in a spoke pattern around the group rotation axis X and projecting radially outside the circumference defined by the distal ends of the inner rollers 14.

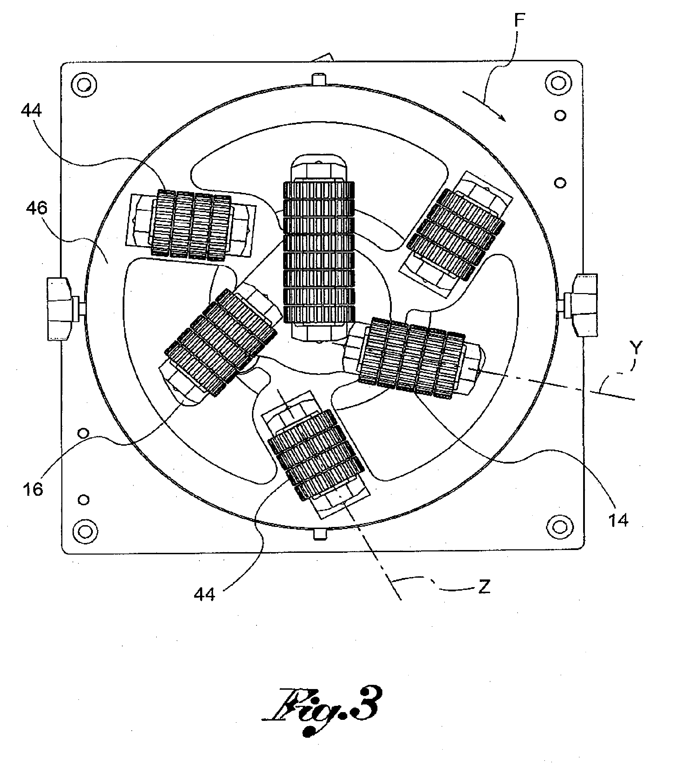

According to a preferred embodiment, the roller rotation axis Y,Z of at least one of the inner rollers 14 and of at least one of the outer rollers 44 is inclined backwards in relation to the direction of rotation of the group rotation axis X, indicated by the arrow F in figure 3.

In one embodiment, the outer rollers 44 alternate circumferentially with the inner rollers 14. For example the machine is provided with three inner rollers 14, substantially angularly equidistant from each other, and with three outer rollers 44, also angularly equidistant from each other, each outer roller 44 being positioned substantially in an equidistant position between two inner rollers 14.

In a preferred embodiment, the first roller means 12 are supported by an inner plate 16. Said inner plate is joined to a first rotation shaft 18 with rotation axis coinciding with the group rotation axis X.

In a preferred embodiment, the second flattening means 44 are supported by an outer plate 46. Said outer plate 46 is joined to a second rotation shaft 48, coaxial to the first rotation shaft 18.

In one embodiment shown in the drawings, the first rotation shaft 18 is a hollow outer shaft and the second rotation shaft 48 is an inner shaft, situated that is inside said hollow outer shaft 18.

In a preferred embodiment, the inner plate 16 is connected to the first rotation shaft 18 by means of a connection plate 34, which extends parallel to and above the inner plate 16. The connection plate 34 and the inner plate 16 are connected to each other by driving posts 36.

The outer plate 46 is placed between the connection plate 34 and the inner plate 16. In said outer plate 46 drive holes are made for the passage of the driving posts 36 through the outer plate 46. Consequently, a rotation of the inner roller group 10 or of the outer roller group 40 is also transmitted to the other group by the coupling of the driving posts 36 and the drive holes 50. Advantageously, therefore, according to a preferred embodiment only one out of the first rotation shaft 18 and the second rotation shaft 48 receives the rotary movement from the motor means 100, while the other of said shafts is dragged in rotation by the first.

On the other hand, the drive holes 50 are suitable for permitting an axial translation of the outer plate 46 along the driving posts 36 and thereby the translation of the entire outer roller group 40 in relation to the inner roller group 10.

To conduct such axial sliding of one group in relation to the other, in one embodiment shaft sliding bushes 24 are provided between the hollow outer rotation shaft 18 and the inner rotation shaft 48.

In one embodiment, the shaft which receives the rotatory movement from the motor means 100 is the hollow outer shaft 18. In one embodiment, a pulley 102 is fitted to an apical portion of said hollow outer shaft 18 which is driven by a motor device 104 by means of a transmission belt 106.

In a preferred embodiment, the hollow outer shaft 18 is axially fixed to a hollow outer cylindrical body 60, placed coaxially around said outer shaft 18. Said hollow outer cylindrical body 60 contains both rotation shafts 18 and 48, except for their upper and lower terminal portions, which protrude from said cylindrical body 60.

Advantageously the hollow cylindrical body 60 supports at least one pair of bearings 62 for the rotation of the outer shaft 18.

Said hollow cylindrical body 60 is delimited above by an upper plate 64 and below by a lower plate 66, both perforated to permit the passage of the terminal portions of the rotation shafts 18, 48.

According to one embodiment, the upper plate 64 supports the motor means 100 and outer group control means 110 which impart the axial shift to the outer roller group 40.

In a preferred embodiment, said control means 110 comprise a pneumatic cylinder 112 mounted on a bracket 114 attached to the upper plate 64. Said pneumatic cylinder has a piston 115 operatively connected to the inner shaft 48 and axially movable between a raised position, in which it keeps said inner shaft, and thereby the entire outer roller group 40, in a rearward position in relation to the inner roller group 10, in which the outer rollers are raised in relation to the inner rollers, and a lowered position, in which the outer roller group 40 is aligned with the inner roller group 10 in such a way that the outer rollers are coplanar with the inner rollers.

In a preferred embodiment, a thrust bearing 117 is attached to the piston 115 of the pneumatic cylinder 112 fitted round the apical portion of the inner shaft 48 projecting upwards from the apical portion of the hollow outer shaft 18. Said thrust bearing 117 is suitable for absorbing the axial loads imposed by the pneumatic cylinder 112 and at the same time permits the rotation of the inner shaft 18.

In one embodiment, the pneumatic cylinder 112 is a single acting cylinder. The return of the piston 115 to a raised position is therefore commanded by elastic means 116, for example in the form of helical springs placed around the drive posts between the outer plate 46 and the underlying inner plate 16.

Advantageously, in the absence of a command given to the pneumatic cylinder 112 the helical springs 116 keep the outer plate 46 pressed against the connection plate 34, in such a way that the outer roller group 40 proves axially constrained to the inner roller group 10.

According to a preferred embodiment, the lower plate 66 supports a casing 120 which extends downwards around the inner and outer roller means. Said casing 120 is closed at the bottom by a cloth or other similar element of "interposition 122 made in a foodstuff compatible material, placed between the roller means and the dough to prevent the same from sticking to said roller means. Such interposition element 122 is of such thickness and flexibility as not to influence the rolling action performed by the roller means on the dough.

According to a preferred embodiment, the inner roller group 10 and the outer roller group 40 can be moved axially and jointly between an inactive position, away from the support surface 2 of the dough 3 and an active position, near said support surface 2, in which at least the inner roller group 10 interacts with the dough 3. It should be noted that when the pneumatic cylinder 112 driving the translation of the outer roller group 40 is not operated, the two roller groups are axially constrained to each other, the outer plate 46 of the outer roller group 40 being constrained between the helical springs 116 and the connection plate 34 of the inner roller group 10.

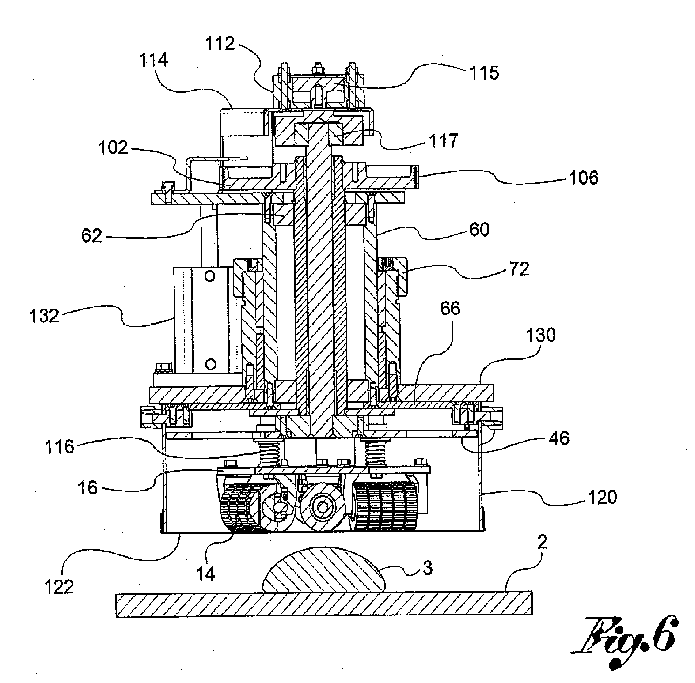

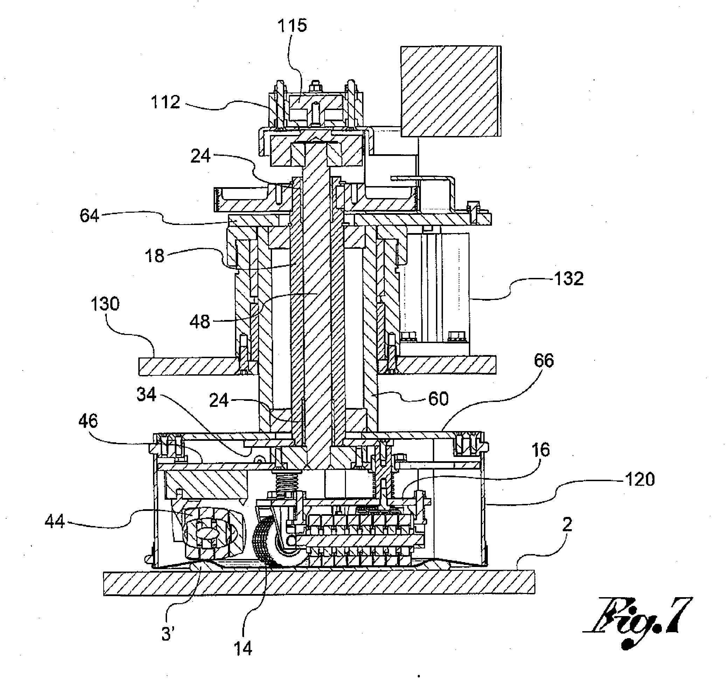

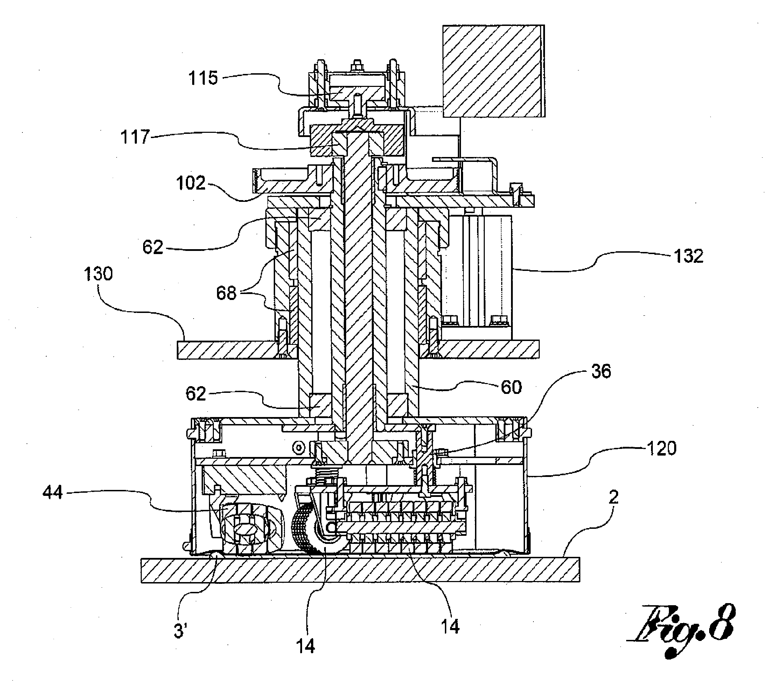

More specifically, one of the two upper 64 or lower 66 plates closing the hollow cylindrical body 60 is connected to a fixed support plate 130 of the roller head by head driving means 132 in such a way that the hollow cylindrical body 60, and with it the two roller groups with relative drive means, can be moved between said active and inactive positions. For example, the bodies of two head driving means 132 are attached to the support plate 130. The stems 133 of the pistons of said cylinders 132 are attached to the upper plate 64 of the outer body. Consequently, when said stems 133 are in a forward position the hollow cylindrical body 60 is in the inactive position, away from the support surface 2 (figure 6); when the head drive means are driven so as to make the stems 133 retract, the hollow cylindrical body 60 is lowered to rapidly reach the active position, near the support plane 2 (figures 7 and 8).

Advantageously, the hollow cylindrical body 60 slides axially on body sliding bushes 68 supported by a fixed body 70, also fitted to the support plate 130.

In one embodiment, an adjustment nut 72 is screwed to the apex of said fixed body 70 suitable for permitting adjustment of the stroke of the head drive means 132.

Figures 6 -8 show a functioning sequence of the machine according to the invention, in a preferred embodiment.

A block of dough 3 to be rolled out is placed on a support surface 2. Initially, the two flattening groups 10, 40 are in the raised position, away from the support surface 2 (figure 6). In this inactive starting position, the outer roller group 40 is, moreover, rearward of the inner roller group 10, that is, raised even more in relation to the support surface.

The two groups are then made to translate downwards jointly, that is maintaining the same reciprocal position, by the head drive means 132, until the inner roller group 10 reaches a predefined distance from the support surface 2, which corresponds substantially to the desired thickness of the dough. Advantageously, such axial shifting of the two groups occurs rapidly.

At least the inner roller group 10 is then driven to rotate by the motor means 100 to roll out the dough (figure 7). In the preferred embodiment, the outer roller group 40 is also dragged in rotation. In this position of the machine, the roller means of the outer group 40 do not yet work the dough and a raised edge 3' is formed below them.

After a predefined time, the outer roller group 40 is lowered to the same height as the inner group. As shown in figure 8, the raised edge 3' of the dough 3 previously formed by the action of the inner group, is flattened by the outer roller means, which help to give the dough the desired diameter and thickness. It should be note that the rotatory action of the outer rollers and their inclination in the direction of rotation does not entirely eliminate the raised edge 3' but reduces it in height and pushes it radially outwards, at the circumference defined by said outer rollers 44.

Thanks to the split and sequential action of the two roller groups it has been found that when the two groups return to the raised starting position, the dough does not retract but remains in the state imposed by the rollers.

The sequential action performed by the rollers and their inclined position surprisingly simulates the manual action performed by pizza chefs thereby making it possible to obtain a shape of the dough for the pizza which despite being achieved by an automatic machine has the same of thickness, diameter characteristics and raised edge as dough worked manually.

In addition, advantageously, the same result can be achieved on an industrial scale where the blocks of dough are placed on a conveyor belt, by making the roller head slide in synchrony with the belt while the roller groups work the dough.

A person skilled in the art may make modifications, adaptations and replacements of elements with others functionally equivalent to the embodiments of the machine according to the invention so as to satisfy contingent requirements, while remaining within the sphere of protection of the following claims.

## Claims

1. Machine for rolling out dough, in particular for preparing pizza, comprising at least one roller head (1) which comprises:
- an inner roller group (10), comprising first roller means (12) of the dough, suitable to rotate around a group rotation axis (X) substantially orthogonal to a support surface (2) of the dough (3) to be rolled out;
- an outer roller group (40), comprising second roller means (42) of the dough, suitable to rotate around said group rotation axis (X) and positioned radially outermost to said first roller means,
- wherein said outer roller group (40) is axially movable in relation to the inner roller group in such a way that at least one step of rolling out the dough can be performed with only one, or at least mainly with one, of said first and second roller groups.

2. Machine according to claim 1, wherein the first roller means comprise a plurality of inner rollers (14) with roller rotation axes (Y) substantially orthogonal to the group rotation axis, coplanar to each other and positioned in a spoke pattern around the group rotation axis.

3. Machine according to claim 2, wherein the second roller means comprise a plurality of outer rollers (44) with roller rotation axes (Z) substantially orthogonal to the group rotation axis, coplanar to each other and positioned in a spoke pattern around the group rotation axis and projecting radially outside the circumference defined by the distal ends of the inner rollers.

4. Machine according to any of the previous claims, wherein the roller rotation axis (Y,Z) of at least one inner roller and at least one outer roller is inclined backwards in relation to the direction of rotation of the group rotation axis (X).

5. Machine according to any of the previous claims, wherein the first roller means are supported by an inner plate (16) joined to a first rotation shaft (18) with rotation axis coinciding with the group rotation axis (X).

6. Machine according to claim 5, wherein the second roller means are supported by an outer plate (46) joined to a second rotation shaft (48) coaxial to the first rotation shaft (18).

7. Machine according to claim 6, wherein the first rotation shaft (18) is a hollow outer shaft and wherein the second rotation shaft (48) is an inner shaft situated inside said hollow outer shaft.

8. Machine according to claim 6 or 7, wherein one of said rotation shafts receives the rotatory movement from motor means (100), and wherein the other of said shafts is dragged in rotation by the shaft made to rotate by said motor means.

9. Machine according to any of the claims 6-8, wherein between the inner rotation shaft and the outer rotation shaft sliding bushes (24) are provided suitable to permit the axial shift of the inner rotation shaft in relation to the outer rotation shaft.

10. Machine according to any of the previous claims, wherein the outer roller group is moved axially by a pneumatic cylinder (12) acting on a thrust bearing (117) mounted around an apical portion of the inner shaft (48).

11. Machine according to any of the previous claims, comprising a casing (120) which extends around the roller means and which is closed at the bottom by a cloth or other similar element of interposition (122) suitable to place itself between the roller means and the dough.

12. Machine according to any of the previous claims, wherein the inner roller group and the outer roller group can be moved axially and jointly between an inactive position away from the support surface of the dough and an active position near said support surface.

13. Machine according to claim 12, wherein the two roller groups are joined in an axial direction to an outer hollow cylindrical body (60) which supports bearings (62) for the rotation of the outer hollow shaft (18), said outer hollow cylindrical body being supported by a fixed support plate (130) by head driving means (132) suitable to move said hollow cylindrical body (60) between said active and inactive positions in relation to said fixed support plate (130).

14. Machine according to any of the previous claims, comprising electronic and/or electromechanical means suitable to:
- drive the inner roller group (10) at least to rotate;
- position the two roller groups (10,40) in a raised inactive position, away from the support surface (2), with the outer roller group (40) rearwards of the inner roller group (10);
- translate the two roller groups towards the support surface until the inner roller group (10) reaches a predefined distance from said support surface (2) in which to perform rolling out of the dough;
- after a predefined period, to axially move the outer roller group only (40) so as to bring it substantially to the same height as the inner roller group (10).

15. Machine according to the previous claim, wherein the outer roller group (40) is moved in rotation simultaneously to the inner roller group (10) or when it has reached the same height as the inner roller group.

## Patentansprüche

1. Maschine zum Ausrollen von Teig, insbesondere zur Herstellung von Pizza, die wenigstens einen Rollen- bzw. Walzenkopf (1) umfasst, der umfasst:
- eine innere Walzengruppe (10), die erste Walzenmittel (12) für den Teig umfasst, die geeignet sind, sich um eine Gruppendrehachse (X) im Wesentlichen orthogonal zu einer Haltefläche (2) des Teigs (3), der ausgerollt werden soll, zu drehen;
- eine äußere Walzengruppe (40), die zweite Walzenmittel (42) für den Teig umfasst, die geeignet sind, sich um die Gruppendrehachse (X) zu drehen, und radial am weitesten auswärts von dem ersten Walzenmitteln positioniert sind,
- wobei die äußere Walzengruppe (40) in Bezug auf die innere Walzengruppe in einer derartigen Weise axial beweglich ist, dass wenigstens ein Schritt zum Ausrollen des Teils nur mit einer oder wenigstens hauptsächlich mit einer der ersten und zweiten Walzengruppen durchgeführt werden kann.

2. Maschine nach Anspruch 1, wobei die ersten Walzenmittel eine Vielzahl innerer Walzen (14) mit Walzendrehachsen (Y) umfassen, die im Wesentlichen senkrecht zu der Gruppendrehachse, komplanar zueinander und in einem Speichenmuster um die Gruppendrehachse herum positioniert sind.

3. Maschine nach Anspruch 2, wobei die zweiten Walzenmittel eine Vielzahl äußerer Walzen (44) mit Walzenachsen (Z) umfassen, die im Wesentlichen senkrecht zu der Gruppendrehachse, komplanar zueinander und in einem Speichenmuster um die Gruppendrehachse herum positioniert sind und von dem Umfang, der durch die distalen Enden der inneren Walzen definiert ist, radial nach außen vorstehen.

4. Maschine nach einem der vorangehenden Ansprüche, wobei die Walzendrehachse (Y, Z) wenigstens einer inneren Walze und wenigstens einer äußeren Walze in Bezug auf die Drehrichtung der Gruppendrehachse (X) nach hinten geneigt ist.

5. Maschine nach einem der vorangehenden Ansprüche, wobei die ersten Walzenmittel von einer inneren Platte (16) gehalten werden, die mit einer ersten Drehwelle (18) verbunden ist, wobei die Drehachse mit der Gruppendrehachse (X) übereinstimmt.

6. Maschine nach Anspruch 5, wobei die zweiten Walzenmittel von einer äußeren Platte (46) gehalten werden, die mit einer zweite Drehwelle (48) verbunden ist, die koaxial zu der ersten Drehwelle (18) ist.

7. Maschine nach Anspruch 6, wobei die erste Drehwelle (18) eine hohle Außenwelle ist und wobei die zweite Drehwelle (48) eine Innenwelle ist, die sich innerhalb der hohlen Außenwelle befindet.

8. Maschine nach Anspruch 6 oder 7, wobei eine der Drehwellen die Drehbewegung von Motormitteln (100) aufnimmt und die andere der Wellen durch die Welle, die von den Motormitteln zum Drehen gebracht wird, in der Drehung mitgeschleppt wird.

9. Maschine nach einem der Ansprüche 6 - 8, wobei zwischen der inneren Drehwelle und der äußeren Drehwelle Gleitbuchsen (24) bereitgestellt sind, die geeignet sind, die Axialverschiebung der inneren Drehwelle in Bezug auf die äußere Drehwelle in zuzulassen.

10. Maschine nach einem der vorangehenden Ansprüche, wobei die äußere Walzengruppe durch einen pneumatischen Zylinder (12), der auf ein Axialdrucklager (117), das um einen an der Spitze liegenden Abschnitt der Innenwelle (48) montiert ist, wirkt, axial bewegt wird.

11. Maschine nach einem der vorangehenden Ansprüche, die ein Gehäuse (120) umfasst, das sich um die Walzenmittel herum erstreckt und das auf der Unterseite durch ein Gewebe oder ein anderes ähnliches Einschubelement (122) geschlossen wird, das geeignet ist, sich selbst zwischen den Walzenmitteln und den Teig zu positionieren.

12. Maschine nach einem der vorangehenden Ansprüche, wobei die innere Walzengruppe und die äußere Walzengruppe axial und gemeinsam zwischen einer inaktiven Position weg von der Halteoberfläche des Teigs und einer aktiven Position in der Nähe der Haltefläche bewegt werden können.

13. Maschine nach Anspruch 12, wobei die zwei Walzengruppen in einer Axialrichtung mit einem anderen hohlen zylindrischen Körper (60) verbunden sind, der Lager (62) für die Drehung der äußeren Hohlwelle (18) hält, wobei der äußere hohle zylindrische Körper durch Kopfantriebsmittel (132), die geeignet sind, den hohlen zylindrischen Körper (60) zwischen den aktiven und inaktiven Positionen in Bezug auf die feste Halteplatte (130) zu bewegen, von einer festen Halteplatte (130) gehalten wird.

14. Maschine nach einem der vorangehenden Ansprüche, die elektronische und/oder elektromechanische Mittel umfasst, die geeignet sind, um
- die innere Walzengruppe (10) anzutreiben, so dass sie sich wenigstens dreht;
- die zwei Walzengruppen (10, 40) in einer erhobenen inaktiven Position weg von der Halteoberfläche (2) mit der äußeren Walzengruppe (40) hinter der inneren Walzengruppe (10) zu positionieren;
- die zwei Walzengruppen in Richtung der Haltefläche zu verschieben, bis die innere Walzengruppe (10) einen vordefinierten Abstand von der Haltefläche (2) erreicht, in dem das Ausrollen des Teigs durchgeführt werden soll;
- nach einer vorgegebenen Zeitspanne die äußere Walzengruppe (40) axial zu bewegen, um sie im Wesentlichen auf die gleiche Höhe wie die innere Walzengruppe (10) zu bringen.

15. Maschine nach dem vorangehenden Anspruch, wobei die äußere Walzengruppe (40) in der Drehung gleichzeitig mit der inneren Walzengruppe (10) oder wenn sie die gleiche Höhe wie die innere Walzengruppe erreicht hat, bewegt wird.

## Revendications

1. Machine pour abaisser une pâte, en particulier pour préparer des pizzas, comprenant au moins une tête abaisseuse (1) qui comprend :
- un groupe abaisseur intérieur (10), comprenant des premiers moyens abaisseurs (12) pour abaisser la pâte, pouvant tourner autour d'un axe de rotation du groupe (X) sensiblement perpendiculaire à une surface de support (2) de la pâte (3) à abaisser ;
- un groupe abaisseur extérieur (40), comprenant des deuxièmes moyens abaisseurs (42) pour abaisser la pâte, pouvant tourner autour dudit axe de rotation du groupe (X) et positionné le plus à l'extérieur dans le sens radial par rapport auxdits premiers moyens abaisseurs,
dans laquelle ledit groupe abaisseur extérieur (40) est mobile dans le sens axial par rapport au groupe abaisseur intérieur de telle manière que dans au moins une étape l'abaissement de la pâte puisse être effectué avec un seul, ou du moins principalement avec un seul desdits premier et deuxième groupes abaisseurs.

2. Machine selon la revendication 1, dans laquelle les premiers moyens abaisseurs comprennent plusieurs rouleaux intérieurs (14) avec des axes de rotation de rouleau (Y) sensiblement perpendiculaires à l'axe de rotation du groupe, coplanaires les uns des autres et positionnés en forme de rayons autour de l'axe de rotation du groupe.

3. Machine selon la revendication 2, dans laquelle les deuxièmes moyens abaisseurs comprennent plusieurs rouleaux extérieurs (44) avec des axes de rotation de rouleau (Z) sensiblement perpendiculaires à l'axe de rotation du groupe, coplanaires les uns des autres et positionnés en forme de rayons autour de l'axe de rotation du groupe et dépassant dans le sens radial hors de la circonférence définie par les extrémités distales des rouleaux intérieurs.

4. Machine selon l'une quelconque des revendications précédentes, dans laquelle l'axe de rotation de rouleau (Y, Z) d'au moins un rouleau intérieur et au moins un rouleau extérieur est incliné en arrière par rapport au sens de rotation de l'axe de rotation du groupe (X).

5. Machine selon l'une quelconque des revendications précédentes, dans laquelle les premiers moyens abaisseurs sont supportés par une plaque intérieure (16) assemblée à un premier arbre de rotation (18) dont l'axe de rotation coïncide avec l'axe de rotation du groupe (X).

6. Machine selon la revendication 5, dans laquelle les deuxièmes moyens abaisseurs sont supportés par une plaque extérieure (46) assemblée à un deuxième arbre de rotation (48) coaxial du premier arbre de rotation (18).

7. Machine selon la revendication 6, dans laquelle le premier arbre de rotation (18) est un arbre extérieur creux et dans laquelle le deuxième arbre de rotation (48) est un arbre intérieur situé à l'intérieur dudit arbre extérieur creux.

8. Machine selon la revendication 6 ou 7, dans laquelle l'un desdits arbres de rotation reçoit le mouvement rotatif de moyens moteurs (100), et dans laquelle l'autre desdits arbres est entraîné en rotation par l'arbre mis en rotation par lesdits moyens moteurs.

9. Machine selon l'une quelconque des revendications 6 à 8, dans laquelle sont prévues entre l'arbre de rotation intérieur et l'arbre de rotation extérieur des douilles coulissantes (24) pouvant permettre le décalage axial de l'arbre de rotation intérieur par rapport à l'arbre de rotation extérieur.

10. Machine selon l'une quelconque des revendications précédentes, dans laquelle le groupe abaisseur extérieur est déplacé dans le sens axial par un vérin pneumatique (12) agissant sur un palier de butée (117) monté autour d'une extrémité supérieure de l'arbre intérieur (48).

11. Machine selon l'une quelconque des revendications précédentes, comprenant un boîtier (120) qui s'étend autour des moyens abaisseurs et qui est fermé dans le bas par une toile ou un autre élément interposé (122) similaire pouvant se placer entre les moyens abaisseurs et la pâte.

12. Machine selon l'une quelconque des revendications précédentes, dans laquelle le groupe abaisseur intérieur et le groupe abaisseur extérieur peuvent être déplacés ensemble dans le sens axial entre une position inactive écartée de la surface de support de la pâte et une position active proche de ladite surface de support.

13. Machine selon la revendication 12, dans laquelle les deux groupes abaisseurs sont assemblés dans le sens axial à un corps cylindrique creux extérieur (60) qui supporte des paliers (62) pour la rotation de l'arbre creux extérieur (18), ledit corps cylindrique creux extérieur étant supporté par une plaque de support fixe (130) par des moyens d'entraînement de la tête (132) pouvant déplacer ledit corps cylindrique creux (60) entre lesdites positions active et inactive par rapport à ladite plaque de support fixe (130).

14. Machine selon l'une quelconque des revendications précédentes, comprenant des moyens électroniques et/ou électromécaniques adéquats pour :
- entraîner le groupe abaisseur intérieur (10) au moins en rotation ;
- positionner les deux groupes abaisseurs (10, 40) dans une position inactive relevée, écartée de la surface de support (2), avec le groupe abaisseur extérieur (40) en arrière du groupe abaisseur intérieur (10) ;
- déplacer les deux groupes abaisseurs en translation vers la surface de support jusqu'à ce que le groupe abaisseur intérieur (10) atteigne une distance prédéfinie par rapport à ladite surface de support (2) à laquelle il exécute l'abaissement de la pâte ;
- après un temps prédéfini, déplacer dans le sens axial le seul groupe abaisseur extérieur (40) afin de l'amener sensiblement à la même hauteur que le groupe abaisseur intérieur (10).

15. Machine selon la revendication précédente, dans laquelle le groupe abaisseur extérieur (40) est mis en rotation en même temps que le groupe abaisseur intérieur (10) ou lorsqu'il a atteint la même hauteur que le groupe abaisseur intérieur.
